# EUROPEAN PATENT APPLICATION

(11) **EP 1 750 211 A1**
(43) Date of publication of application: **07.02.2007**
(21) Application number: 06016126.2
(22) Date of filing: 02.08.2006
(51) Int. Cl.: G06F 17/30, H04L 29/08

(54) **Method and apparatus for displaying multimedia content with plug-in on wap browser incorporated in mobile communication terminal**

(30) Priority: 03.08.2005 KR 20050071122
(71) Applicant: Neomtel Co., Ltd., Gangnam-gu, Seoul 135-080 (KR)
(72) Inventor: Yoon, Sung-kyoon, Bundang-gu Seongnam-si, Gyeonggi-do (KR)
(74) Representative: Grünecker, Kinkeldey, Stockmair & Schwanhäusser Anwaltssozietät

(57) **Abstract**

Disclosed is a method of displaying multimedia content using a plug-in in a mobile communication terminal equipped with a WAP (Wireless Application Protocol) browser, including: receiving multimedia content during displaying a WAP page; and blending the WAP page with the multimedia content and displaying the multimedia content and the WAP page on different layers.

## Description

### BACKGROUND OF THE INVENTION

This application claims the priority of Korean Patent Application No. 2005-71122, filed on August 3, 2005, in the Korean Intellectual Property Office, the disclosure of which is incorporated herein in its entirety by reference.

### 1. Field of the Invention

The present invention relates to a technology of playing multimedia content and, more particularly, to a method and apparatus for displaying multimedia content with a plug-in on a Wireless Application Protocol (WAP) browser, which blends a WAP page with multimedia content and displays the blended images on a mobile communication terminal while a user is browsing the WAP page with the WAP browser.

### 2. Description of Related Art

A mobile communication terminal is equipped with a WAP browser that allows users to use WAP ported in the mobile communication terminal to view WAP pages provided from WAP servers connected to the Internet. Examples of data loaded and played by the WAP browser include text and image data (or animation data). When multimedia content contained in a WAP page loaded by the WAP browser is additionally played while the WAP browser is playing a text, the multimedia content is not played independently of the text but played within the same area as the text.

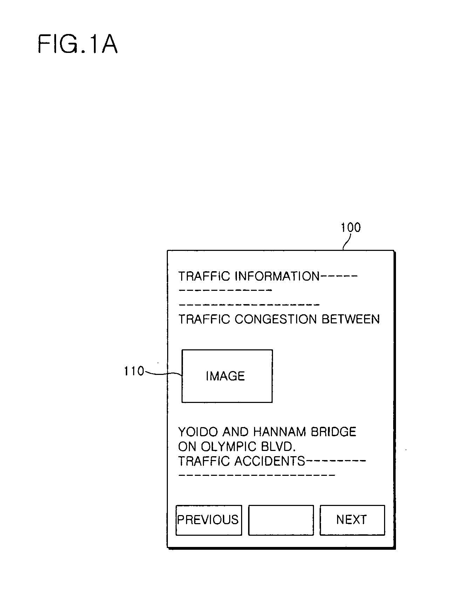

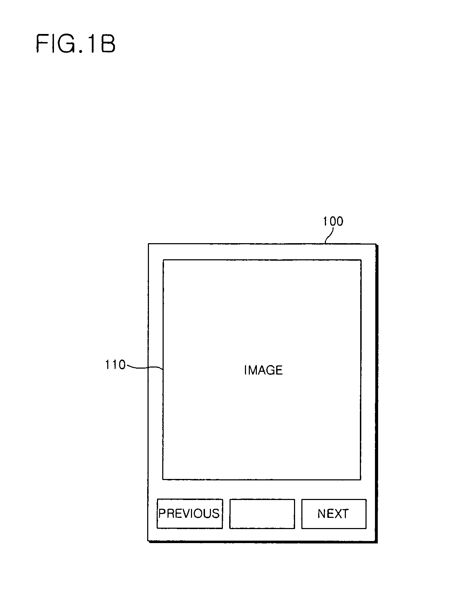

FIGS. 1A and 1B are views for explaining playback of multimedia content by a typical WAP browser.

When image or animation content 110 is played on a WAP browser screen 100, the image or animation content 110 is played either in part of area or in the whole area of a text image played by the WAP browser as shown in FIG. 1A or 1B. Accordingly, the area of text image played by the WAP browser is reduced by the area occupied by the image or animation content 110.

Further, the WAP browser running on the mobile communication terminal has to be terminated to read and display resources, such as photo files, sound files, and SMS messages, stored in the mobile communication terminal.

### SUMMARY OF THE INVENTION

The present invention provides a method and apparatus for displaying multimedia content with a plug-in program on a WAP browser incorporated in a mobile communication terminal, which alpha-blends a WAP page on the WAP browser with multimedia content, such as animation and flash image, played with the plug-in program and displays the blended images on the mobile communication terminal.

The present invention further provides a method and apparatus for displaying multimedia content with a plug-in program on a WAP browser incorporated in a mobile communication terminal, which blends a WAP page with resources stored in a mobile communication terminal and loaded by the plug-in program and displays the blended images on the mobile communication terminal.

According to an aspect of the present invention, there is provided a method of displaying multimedia content using a plug-in in a mobile communication terminal equipped with a WAP (Wireless Application Protocol) browser, including: receiving multimedia content during displaying a WAP page; and blending the WAP page with the multimedia content and displaying the multimedia content and the WAP page on different layers.

The operation of receiving multimedia content may access a server to download the multimedia content by means of the WAP browser or plug-in program executed upon playing the WAP page.

The multimedia content may be downloaded by user using a plug-in program running on the mobile communication terminal during displaying the WAP page.

The operation of displaying may display the WAP page and the multimedia content containing a message indicating occurrence of an event that is inserted during displaying the WAP page.

The event may be a message reception event.

The operation of blending may alpha-blend the WAP page with the multimedia content with a predetermined transparency degree of the WAP page or multimedia content.

The operation of blending may alpha-blend the WAP page with the multimedia content with a transparency degree that is preset in the mobile communication terminal.

The operation of blending may alpha-blend the WAP page placed on a foreground layer with the multimedia content placed on a background layer.

The operation of blending may alpha-blend the WAP page placed on a background layer with the multimedia content on a foreground layer.

A user may press a toggle button to interchange the foreground and background layers.

According to another aspect of the present invention, there is provided an apparatus for displaying multimedia content using a plug-in in a mobile communication terminal equipped with a WAP browser, including: a WAP page storage unit storing WAP pages; a content receiving/storing unit receiving and storing multimedia content during displaying the WAP pages; and a blender blending the WAP page with the multimedia content and displaying the WAP page and the multimedia content on different layers.

The apparatus may further include a mode storage unit storing information concerning which of the WAP page and multimedia content is placed on a foreground layer, where the blender blends the WAP page with the multimedia content and outputs the blended images.

The content receiving/storing unit may access a server to download the multimedia content by means of the WAP browser or plug-in program executed upon playing the WAP page.

The multimedia content may be downloaded by user using a plug-in program running on the mobile communication terminal during displaying the WAP page.

The blender may display the WAP page and the multimedia content containing a message indicating occurrence of an event that is inserted during displaying the WAP page.

The blender may alpha-blend the WAP page with the multimedia content with a predetermined transparency degree of the WAP page or multimedia content.

The blender may alpha-blend the WAP page with the multimedia content with a transparency degree that is preset in the mobile communication terminal.

According to another aspect of the present invention, there is provided a computer readable medium recording programs for implementing on computers the method of displaying multimedia content using a plug-in in a mobile communication terminal equipped with a WAP browser.

### BRIEF DESCRIPTION OF THE DRAWINGS

The above and other features and advantages of the present invention will become more apparent by describing in detail exemplary embodiments thereof with reference to the attached drawings in which:
FIGS. 1A and 1B are views for explaining playback of multimedia content by a typical WAP browser;
FIG. 2 illustrates multimedia content and a WAP page that are blended with each other according to an embodiment of the present invention;
FIGS. 3A to 3C are views for explaining a method of playing images on a WAP browser that are alpha-blended as shown in FIG. 2;
FIG. 4 illustrates multimedia content and a WAP page that are blended with each other according to an embodiment of the present invention;
FIGS. 5A to 5C are views for explaining a method of playing images on a WAP browser that are alpha-blended as shown in FIG. 4;
FIGS. 6A to 6C are views for explaining a method of displaying a phone number search window alpha-blended with a WAP page used for data transmission and entering a destination number on the search window during writing a message on the WAP page;
FIGS. 7A to 7C illustrate a WAP page on a WAP browser alpha-blended with a message received during viewing the WAP page;
FIG. 8 is a block diagram of an apparatus for blending multimedia content with a WAP page and displaying the blended images according to an embodiment of the present invention; and
FIG. 9 is a flow chart of a method of blending multimedia content with a WAP page and displaying the blended images according to an embodiment of the present invention.

### DETAILED DESCRIPTION OF THE INVENTION

Exemplary embodiments in accordance with the present invention will now be described in detail with reference to the accompanying drawings.

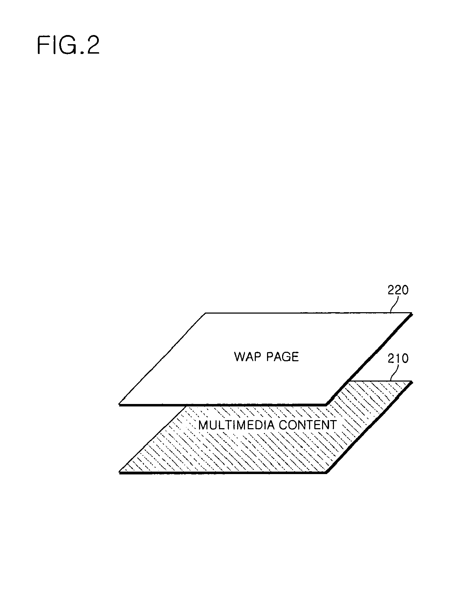

FIG. 2 illustrates multimedia content and a WAP (Wireless Application Protocol) page that are blended with each other according to an embodiment of the present invention.

When multimedia content 210 is loaded during displaying a WAP page 220, the multimedia content 210 is displayed beneath the WAP page 220. That is, the WAP page 220 placed on a foreground layer and the multimedia content 210 placed on a back layer are blended with each other. The multimedia content 210 is loaded by a WAP browser from a WAP server and is played with a plug-in program.

Examples of the multimedia content 210 include animation, animation with sound, flash animation, streaming motion pictures, and content configured to display specific motions instructed by users. Accordingly, examples of the multimedia content 210 blended with the WAP page 220 include user interface data, game content, advertisements, terminal menu, animations, streaming data, and user interface data for representing terminal resources.

If the multimedia content 210 or objects constituting the WAP page 220 have a transparency degree of alpha value, they are blended based on the alpha value. In addition, a new transparency degree may be applied or added based on the setup of a mobile communication terminal equipped with a WAP browser.

When the blended multimedia content 210 and WAP page 220 are displayed to users, color values of pixels constituting the blended images are calculated from the following Equation 1. Equation 1 represents R, G and B values of each of the pixels constituting the blended images, and the color values are calculated with respect to each of R, G and B.

### [Equation 1]

Color value (R, G, B) of alpha-blended image = [(255 - transparency degree)/255] * color value of background image + color value of foreground image

In Equation 1, the term 'transparency degree' is also referred to as an alpha value. The foreground and background images may be the WAP page and multimedia content, respectively. On the contrary, the foreground and background images may be the multimedia content and WAP page, respectively.

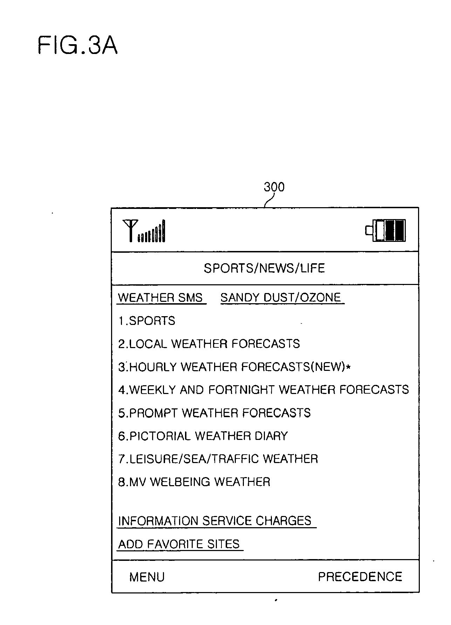

FIGS. 3A to 3B are views for explaining a method of playing images on a WAP browser alpha-blended as shown in FIG. 2.

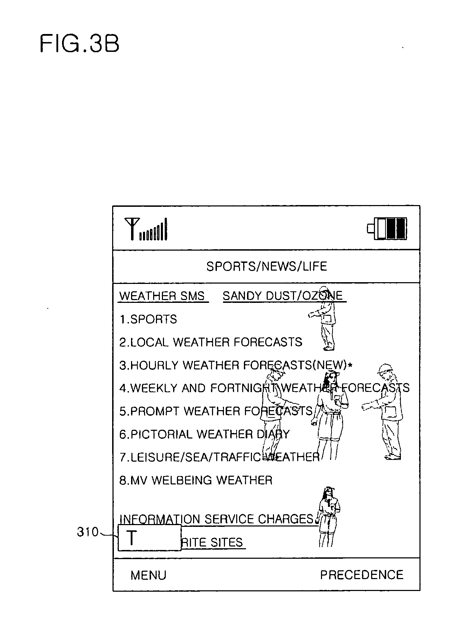

When multimedia content is loaded during displaying a WAP page 300 having information such as weather SMS/sandy dust/ozone as shown in FIG. 3A, the multimedia content is displayed as a background image of the WAP page 300 as shown in FIG. 3B. Referring to FIGS. 3A and 3B, a text is displayed on a white background image of the WAP page 300, while the text may be alpha-blended with the multimedia content. The multimedia content and WAP page 300 may be alpha-blended based on an alpha value of the multimedia content or WAP page 300. In addition, the multimedia content and WAP page 300 may be alpha-blended with an alpha value of the multimedia content or WAP page 300, or alpha-blended an added alpha value based on the setup of a mobile communication terminal.

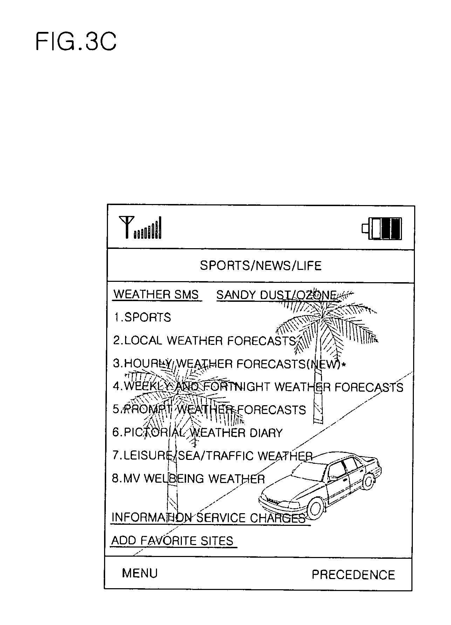

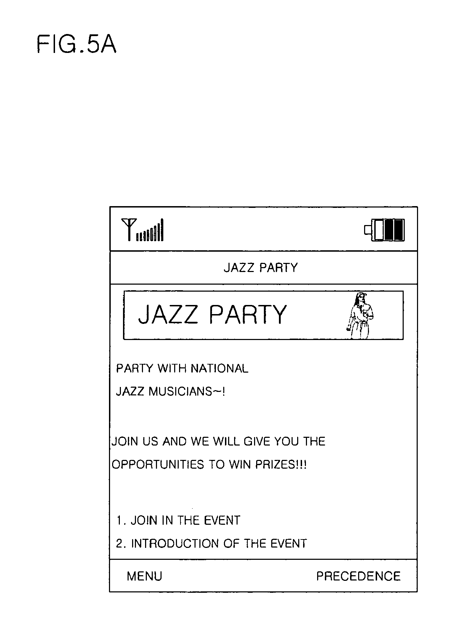

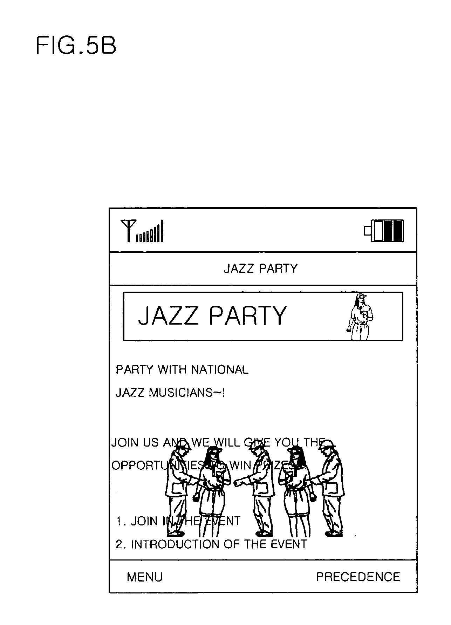

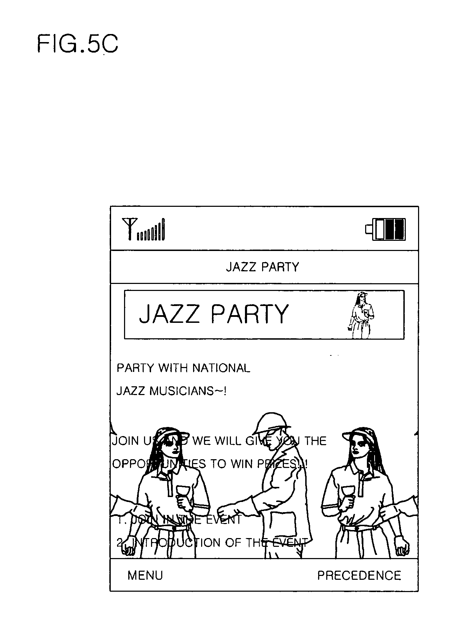

Referring to FIG. 3B, a toggle button 310 is provided together with the multimedia content. When a user pushes the toggle button 310, the multimedia content may be played on the WAP page 300 as described below with reference to FIGS. 5A to 5C. When the multimedia content is displayed on a foreground layer, function buttons of the multimedia content are activated. When the user pushes the function buttons, functions corresponding to the buttons are carried out or other WAP pages may be viewed. Further, an animation background image shown in FIG. 3C may be displayed on the WAP page 300.

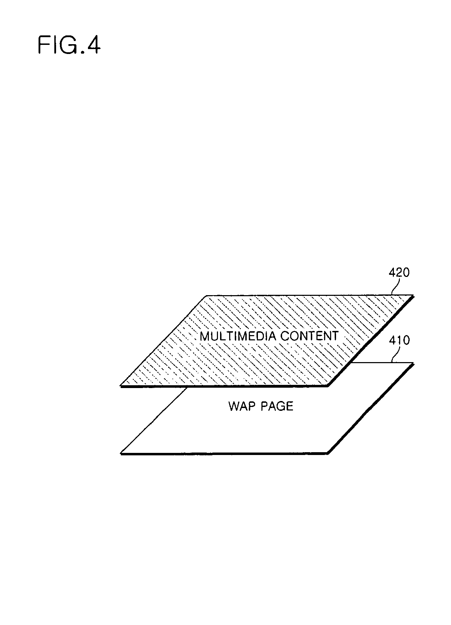

FIG. 4 illustrates multimedia content and a WAP page that are blended with each other according to an embodiment of the present invention.

When multimedia content 420 is loaded during displaying a WAP page 410, the multimedia content 420 is displayed over the WAP page 410. That is, the multimedia content 420 placed on a foreground layer and the WAP page 410 placed on a background layer are blended with each other. The multimedia content is loaded by a WAP browser from a WAP server and is played with a plug-in program.

For example, multimedia content such as pop-up advertisements may be displayed on the WAP page 410 for a certain time period and then disappeared. At this time, alpha-blending may be displayed as described above with reference to FIG. 2.

FIGS. 5A to 5C are views for explaining a method of playing images on a WAP browser that are alpha-blended as shown in FIG. 4.

Referring to FIG. 5A, when a user uses a WAP browser to access a WAP page named Jazz Party, advertisements related to the WAP page may be popped up. Since the advertisements are preferred to be displayed on the foreground layer rather than on the background layer of the WAP page as shown in FIGS. 3A to 3C, the advertisements are displayed on the WAP page as shown in FIGS. 5A to 5C. As described above with reference to FIGS. 3A to 3C, the advertisements may be alpha-blended with the WAP page and displayed. In addition, when the user accesses the WAP page and clicks on banner ads in the WAP page, multimedia content may be played by plug-in programs.

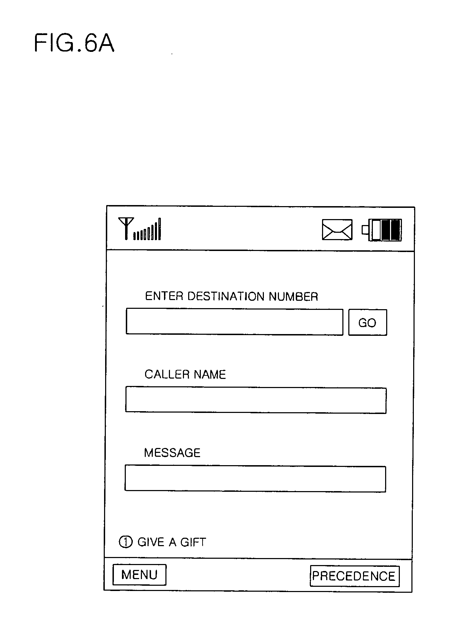

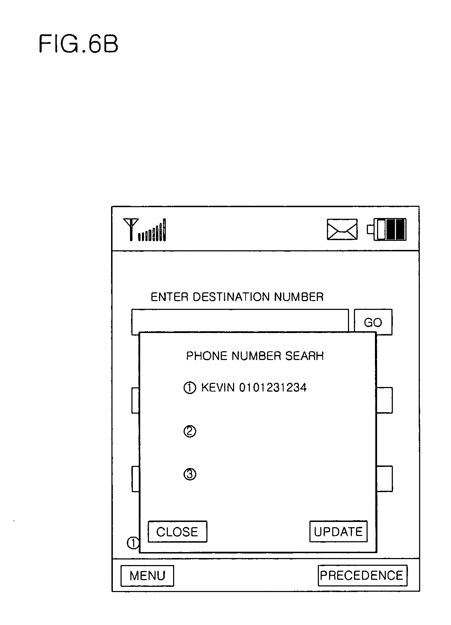

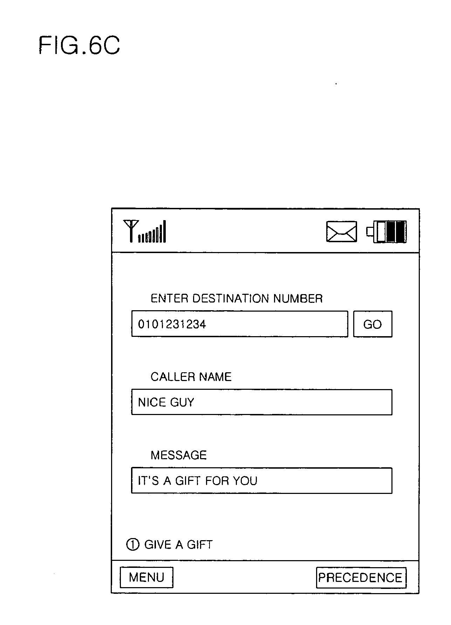

FIGS. 6A to 6C are views for explaining a method of displaying a phone number search window alpha-blended with a WAP page used for data transmission and entering a destination number on the search window during writing a message on the WAP page.

For example, resource data of a terminal is further loaded by a plug-in program on a WAP page that allows a user to transmit text messages or multimedia content to other users, so that a phone number search window can be displayed. Data stored in the terminal is loaded into the phone number search window so that users can view it. The phone number search window may be alpha-blended with a message edit window to be displayed in a semitransparent manner. After searching for the phone number and pushing a confirm button, the user can enter and send the destination phone number and the message or multimedia content. Resource data of the terminal, such as SMS, address book, photo files, bell sounds, or MP3 files, may be loaded and played by the plug-in program.

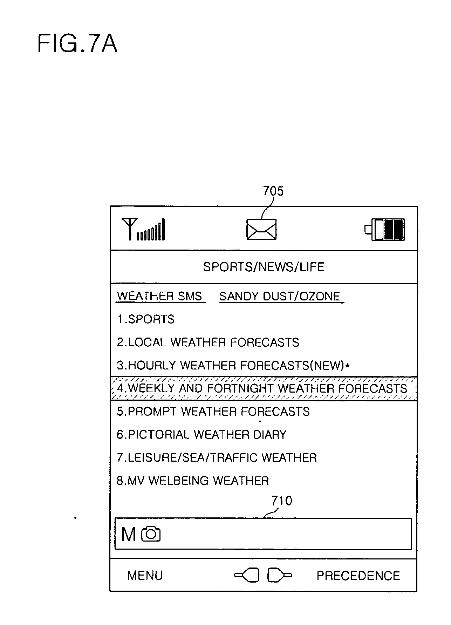

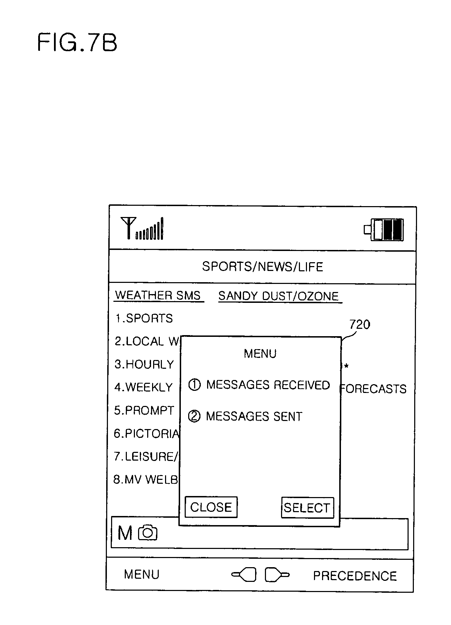

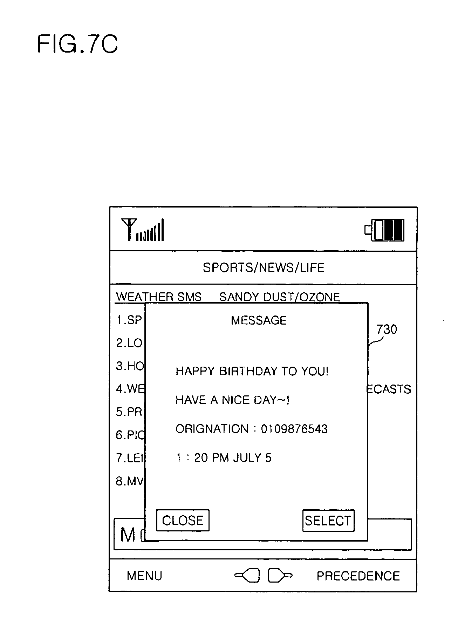

FIGS. 7A to 7C illustrate a WAP page on a WAP browser alpha-blended with a message received during viewing the WAP page.

When receiving a message during browsing a sports/news/life menu, a user is notified through a message reception icon 705 that the message has been received. When the user clicks on a message view icon 710, a message view menu 720 is blended with the WAP page, and the user can view a message 730. The message view menu 720 and the message 730 are displayed with the plug-in program. The message view icon 710 is placed on a layer different from that of the WAP page and is displayed together with every WAP page.

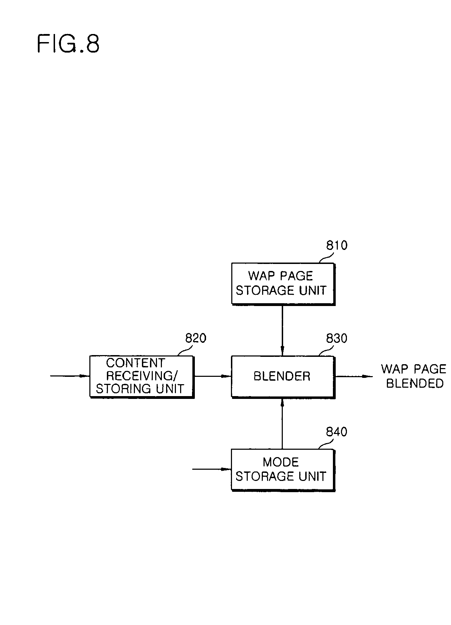

FIG. 8 is a block diagram of a content display apparatus that conducts an alpha-blending operation and displays alpha-blended images according to an embodiment of the present invention.

The content display apparatus includes a WAP page storage unit 810, a content receiving/storing unit 820, a blender 830, and a mode storage unit 840. The WAP page storage unit 810 stores WAP pages read through the WAP browser. Examples of the WAP pages include text data, background data and the like. The content receiving/storing unit 820 receives and transmits the multimedia content to the blender 830. For example, the WAP browser plays the WAP pages, downloads and blends the multimedia content with the WAP pages, and displays the blended images with the plug-in program.

The mode storage unit 840 stores information concerning which of the WAP page and multimedia content is placed on the foreground layer, and transmits the information to the blender 830. That is, the multimedia content may be displayed at the bottom of the WAP page as shown in FIG. 2, or displayed over the WAP page placed as the background image as shown in FIG. 4.

The blender 830 blends the WAP page with the multimedia content and displays the blended images on different layers. At this time, the blender 830 receives from the mode storage unit 840 the information concerning whether the multimedia content will be played as shown in FIG. 2 or played as shown in FIG. 4. Accordingly, the blender 830 blends the WAP page with the multimedia content. As described above, the blender 830 may conduct alpha-blending operation with a transparency degree.

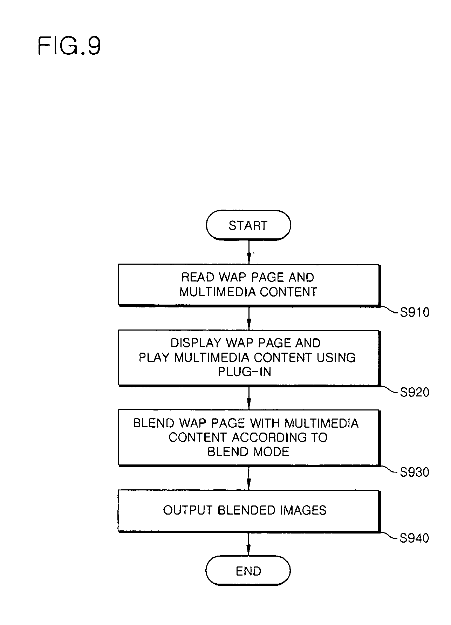

FIG. 9 is a flow chart of a method of blending multimedia content with a WAP page and displaying the blended images according to an embodiment of the present invention.

First, a WAP browser reads a WAP page and multimedia content (S910). The multimedia content is played by a plug-in program while the WAP page is being displayed (S920). The multimedia content is downloaded by the WAP browser accessing a server and is played by the plug-in program.

The WAP page and the multimedia content are blended with each other and displayed on different layers (S930). As described above, the WAP page and the multimedia content may be alpha-blended with a predetermined transparency degree of the WAP page or multimedia content, or with a preset transparency degree in a mobile communication terminal. In the blending operation, the WAP page and the multimedia content may be either displayed on the foreground and background layers, respectively, or displayed on the background and foreground layers, respectively. After resources stored in a memory of the mobile communication terminal are inserted to the multimedia content downloaded from the server beforehand, they may be blended with the WAP page. The blended images are output (S940).

The above-mentioned method of displaying multimedia content with plug-ins may be written with computer programs. Codes and code segments constituting the programs can be easily deduced by computer programmers skilled in the art. In addition, the programs are stored in computer readable media, read and executed by computers, thereby implementing the method of displaying multimedia content with the plug-ins. Examples of the computer readable media include magnetic recording media, optical recording media, and carrier wave media.

As apparent from the above description, WAP pages read through the WAP browser incorporated in mobile information terminals such as mobile communication terminals are blended with multimedia content and the blended WAP pages and multimedia content are displayed on the mobile communication terminals, thus efficiently utilizing narrow playback spaces and displaying data stored in the mobile communication terminals without terminating the WAP browser.

While the present invention has been described with reference to exemplary embodiments thereof, it will be understood by those skilled in the art that various changes in form and details may be made therein without departing from the scope of the present invention as defined by the following claims.

## Claims

1. A method of displaying multimedia content using a plug-in in a mobile communication terminal equipped with a WAP (Wireless Application Protocol) browser, comprising:
receiving multimedia content during displaying a WAP page; and
blending the WAP page with the multimedia content and displaying the multimedia content and the WAP page on different layers.

2. The method of claim 1, wherein the operation of receiving multimedia content accesses a server to download the multimedia content by means of the WAP browser or plug-in program executed upon playing the WAP page.

3. The method of claim 1, wherein the multimedia content is downloaded by user using a plug-in program running on the mobile communication terminal during displaying the WAP page.

4. The method of claim 1, wherein the operation of displaying displays the WAP page and the multimedia content containing a message indicating occurrence of an event that is inserted during displaying the WAP page.

5. The method of claim 4, wherein the event is a message reception event.

6. The method of claim 1, wherein the operation of blending alpha-blends the WAP page with the multimedia content with a predetermined transparency degree of the WAP page or multimedia content.

7. The method of claim 1, wherein the operation of blending alpha-blends the WAP page with the multimedia content with a transparency degree that is preset in the mobile communication terminal.

8. The method of claim 1, wherein the operation of blending alpha-blends the WAP page placed on a foreground layer with the multimedia content placed on a background layer.

9. The method of claim 1, wherein the operation of blending alpha-blends the WAP page placed on a background layer with the multimedia content on a foreground layer.

10. The method of claim 8, wherein a user presses a toggle button to interchange the foreground and background layers.

11. The method of claim 9, wherein a user presses a toggle button to interchange the foreground and background layers.

12. An apparatus for displaying multimedia content using a plug-in in a mobile communication terminal equipped with a WAP browser, comprising:
a WAP page storage unit storing WAP pages;
a content receiving/storing unit receiving and storing multimedia content during displaying the WAP pages; and
a blender blending the WAP page with the multimedia content and displaying the WAP page and the multimedia content on different layers.

13. The apparatus of claim 12, further including a mode storage unit storing information concerning which of the WAP page and multimedia content is placed on a foreground layer,
wherein the blender blends the WAP page with the multimedia content and outputs the blended images.

14. The apparatus of claim 12, wherein the content receiving/storing unit accesses a server to download the multimedia content by means of the WAP browser or plug-in program executed upon playing the WAP page.

15. The apparatus of claim 12, wherein the multimedia content is downloaded by user using a plug-in program running on the mobile communication terminal during displaying the WAP page.

16. The apparatus of claim 12, wherein the blender displays the WAP page and the multimedia content containing a message indicating occurrence of an event that is inserted during displaying the WAP page.

17. The apparatus of claim 16, wherein the event is a message reception event.

18. The apparatus of claim 12, wherein the blender alpha-blends the WAP page with the multimedia content with a predetermined transparency degree of the WAP page or multimedia content.

19. The apparatus of claim 12, wherein the blender alpha-blends the WAP page with the multimedia content with a transparency degree that is preset in the mobile communication terminal.

20. A computer readable medium recording programs for implementing on computers the method of claim 1.
